(19) Europäisches Patentamt

European Patent Office

Office européen des brevets

(11) **EP 1 491 738 B1**

(12) **FASCICULE DE BREVET EUROPEEN**

(45) Date de publication et mention de la délivrance du brevet:
**01.03.2006  Bulletin 2006/09**

(51) Int Cl.:
***F01N 11/00*** (2006.01)     ***F01N 3/021*** (2006.01)

(21) Numéro de dépôt: **04300326.8**

(22) Date de dépôt: **22.06.2004**

(54) **Procédé de surveillance de l'état opérationnel d'un filtre à particules reposant sur la comparaison entre une valeur estimée et une valeur calibrée**

Verfahren zur Überwachung des Betriebszustandes eines Partikelfilters basierend auf dem Vergleich zwischen einem geschätzten Wert und einem kalibrierten Wert

Method of monitoring the operational state of a particulate filter based on the comparison between an estimated value and a calibrated value

(84) Etats contractants désignés:
**AT BE ES GB IT**

(30) Priorité: **27.06.2003  FR 0307768**

(43) Date de publication de la demande:
**29.12.2004  Bulletin 2004/53**

(73) Titulaire: **Renault s.a.s.**
**92100 Boulogne Billancourt (FR)**

(72) Inventeur: **Perrin, Olivier**
**94100 Saint-Maur (FR)**

(56) Documents cités:
**FR-A- 2 799 504      FR-A- 2 804 177**
**FR-A- 2 832 758**

- **PATENT ABSTRACTS OF JAPAN vol. 1997, no. 02, 28 février 1997 (1997-02-28) & JP 08 284644 A (NIPPONDENSO CO LTD), 29 octobre 1996 (1996-10-29)**
- **PATENT ABSTRACTS OF JAPAN vol. 018, no. 413 (M-1649), 3 août 1994 (1994-08-03) & JP 06 123216 A (FUJITSU TEN LTD), 6 mai 1994 (1994-05-06)**

**EP 1 491 738 B1**

**Description**

L'invention concerne, de façon générale, les techniques relatives au respect de l'environnement dans le domaine automobile.

Plus précisément, l'invention concerne un procédé de surveillance de l'état opérationnel d'un filtre à particules équipant un moteur thermique et comprenant, d'amont en aval, une cavité d'entrée de gaz d'échappement polluants et une cavité de sortie de gaz d'échappement dépollués, ces cavités étant séparées l'une de l'autre par une pluralité de parois poreuses, et ce procédé comprenant : une étape préalable de modélisation au cours de laquelle est construit un modèle physique impliquant une pluralité de grandeurs physiques dynamiques associées au fonctionnement du filtre à particules; une étape itérative de mesure au cours de laquelle sont évaluées des grandeurs physiques connaissables appartenant à la pluralité de grandeurs physiques dynamiques; et une étape itérative de traitement au cours de laquelle sont effectués des calculs impliquant le modèle physique et les grandeurs physiques connaissables évaluées, cette étape de traitement produisant au moins un indicateur d'état lié à l'état opérationnel du filtre.

Parmi les solutions mises en oeuvre par les constructeurs automobiles dans le but de préserver la qualité de l'air figurent les techniques dites de "post-traitement", qui visent à traiter les gaz émis dans la ligne d'échappement du véhicule, et qui incluent, d'une part, les systèmes de traitement continu tels que les pots catalytiques et, d'autre part, les pièges à polluants, associés à des dispositifs actifs assurant leur purge périodique.

L'invention concerne les filtres à particules, qui constituent l'adaptation de la technologie générale de post-traitement à l'élimination des particules Diesel (fumées noires émises à l'échappement), et plus précisément la surveillance et le diagnostic embarqué de l'état opérationnel de ces filtres.

Le vocable de "particule" désigne ici un ensemble de produits présents dans les effluents des moteurs Diesel et recueillis simultanément selon une procédure normalisée, en particulier des grains de suie de très faible diamètre (0,1 à 0,3 microns pour la majorité).

Bien que la masse totale de particules émises par les véhicules Diesel actuels soit très faible (de l'ordre de 10 à 50 grammes par tonne de gaz d'échappement), la réduction des émissions de particules reste un objectif majeur dans une perspective écologique.

De façon générale, un filtre à particules piège les particules en utilisant le principe de captation. L'intérieur de chaque filtre est donc conçu pour favoriser le contact des particules avec les fibres ou les pores du filtre lui-même. Il existe différentes technologies de filtration : filtres monolithes céramiques, filtres en fibres céramiques, filtres métalliques, filtres tricotés en céramique. Chacune caractérise un compromis entre coût, efficacité, contre-pression, résistance aux contraintes thermiques (gradients) et mécaniques (vibrations), disponibilité.

Les filtres monolithes céramiques sont dérivés des supports utilisés dans les catalyseurs à trois voies. Les monolithes sont des supports constitués d'un très grand nombre de canaux parallèles. Un canal sur deux est bouché, alternativement à chaque extrémité, de sorte que le filtre comprend une cavité d'entrée formée par l'ensemble des canaux d'entrée et une cavité de sortie formée par l'ensemble des canaux de sortie, les gaz traversant nécessairement les parois poreuses séparant les canaux d'entrée et de sortie. L'efficacité de filtration est excellente mais la contre-pression importante. Le matériau filtrant est généralement de la cordiérite ou du carbure de silicium.

Un filtre à particules retient les particules des gaz d'échappement et par conséquent se remplit au fur et à mesure du fonctionnement du moteur. Il risque de se colmater d'autant plus rapidement qu'il est efficace. Le premier effet sensible dû à l'adjonction du filtre est donc l'augmentation de la contre-pression à l'échappement, qui perturbe le fonctionnement du moteur et dégrade ses performances.

Pour rendre au filtre ses caractéristiques initiales (efficacité, capacité de stockage, perte de charge), il est connu de procéder à une opération de régénération du filtre à particules appelée "purge", et qui consiste à brûler les particules accumulées dans le filtre.

Pendant toute la durée de vie du véhicule, le filtre subit ainsi une alternance de chargements en particules et de purges. Normalement, la régénération complète du filtre (obtenue par apport d'oxygène) n'est possible que si le carbone piégé est porté à une température suffisante (au moins 550-600 ˚ C) et si la pression partielle en oxygène est suffisante (au-delà de 11 à 12 % d'O 2). Elle peut s'effectuer essentiellement suivant deux processus, à savoir par catalyse et / ou par voie thermique (techniques de réchauffage externes au moteur et/ou interventions sur le moteur lui-même), et nécessite une stratégie de contrôle de la régénération (détection du chargement, déclenchement, surveillance et coupure de la séquence de régénération).

Alors que l'efficacité de filtration d'un filtre à particules neuf est excellente, typiquement supérieure à 99 %, il arrive que le filtre à particules et son efficacité de filtration se détériorent à la suite d'un choc thermique ou mécanique.

Un filtre à particules en carbure de silicium peut se dégrader de différentes façons, et notamment par apparition de fissures et craquelures, et par oxydation du carbure de silicium.

Dans le premier cas, les fissures apparaissant dans les parois du filtre deviennent des passages préférentiels pour les gaz d'échappement et laissent donc échapper les particules à la faveur de gradients thermiques élevés (> 100 ˚C / cm).

L'oxydation du carbure de silicium en silice à hautes températures (> 1000-1100 ˚C) prédomine sur la face aval du filtre où apparaissent des points blancs ouvrant et fermant des canaux. Ces dégradations surviennent d'autant plus rapidement que les chargements en suie se font au- delà (double ou triple) de la limite préconisée, que la concentration d'additif mélangé au gazole est importante et que la quantité d'oxygène présente dans les gaz d'échappement est élevée. La régénération dite incontrôlée est la plus sévère pour le filtre (emballement de la combustion par baisse du débit volumique et apport massif d'oxygène une fois celle-ci amorcée : retour ralenti ou sur un point peu chargé après une forte charge moteur par exemple). Les gaz d'échappement circulent alors directement d'amont en aval du filtre sans être déchargés de leurs particules. Néanmoins, le substrat en carbure de silicium est très résistant : en dépit de chargements importants et de conditions de régénération sévères, l'efficacité de filtration reste importante (> 50-60 %).

Pour satisfaire aux prescriptions relatives à la surveillance en fonctionnement des véhicules équipés d'un moteur à allumage par compression, les systèmes de diagnostic embarqués doivent surveiller le fonctionnement et l'intégrité du piège à particules.

Ainsi des procédés de surveillance de l'état opérationnel d'un filtre à particules ont déjà été proposés, notamment dans les documents de brevets FR 2 774 421, FR 2 795 132, FR 2 799 504, et FR 2 814 498.

Le brevet FR 2 774 421 préconise l'utilisation d'informations données par un capteur de pression différentielle mesurant la perte de charge dans le filtre. La surveillance repose sur le fait que la pression différentielle mesurée aux bornes d'un filtre en bon état de fonctionnement ne peut devenir inférieure à celle du filtre neuf. Le procédé décrit dans ce brevet détecte un mauvais fonctionnement du filtre à particules lorsqu'après une distance programmable parcourue par le véhicule, la perte de charge aux bornes du filtre reste inférieure à la perte de charge d'un filtre neuf ou faiblement chargé. Il détecte également un colmatage du filtre lorsque la perte de charge aux bornes du filtre excède une perte de charge prédéterminée.

Le brevet FR 2 795 132 propose un système de déteceion de dysfonctionnements d'un dispositif de traitement des gaz d'échappement comprenant, dans le sens de l'écoulement des gaz d'échappement, un catalyseur d'oxydation, un premier filtre à particules et un second filtre à particules, à catalyse et de plus faible volume que le premier filtre. Le dispositif comporte un capteur de pression différentielle entre l'amont et l'aval du premier filtre à particules et un capteur de pression en aval du premier filtre à particules. Il permet la surveillance du premier filtre à particules. Un moyen d'alerte prévient l'utilisateur que ce filtre est défectueux soit lorsque le capteur de pression indique une valeur supérieure à une valeur maximale de pression déterminée et que le capteur de pression différentielle indique une valeur inférieure à une valeur minimale de pression différentielle déterminée, soit lorsque le capteur de pression différentielle indique une valeur inférieure à une valeur de pression différentielle minimale déterminée, soit enfin lorsque le capteur de pression différentielle indique une valeur supérieure à la valeur de pression différentielle minimale déterminée et que la valeur de la pression différentielle n'augmente pas alors que le moteur émet des particules.

La valeur maximale de pression déterminée et les valeurs minimales de pression différentielle déterminées sont cartographiées pour chaque type de filtre en fonction du régime et de la charge du moteur. Ce diagnostic s'appuie notamment sur le fait que la perte de charge produite par le premier filtre à particules défectueux est minime et plus faible que celle engendrée par ce dernier dans un état normal de fonctionnement. En effet, la détérioration ayant abouti au perçage de canaux de filtration, les gaz d'échappement circulent directement d'amont en aval du filtre sans traverser les parois poreuses. En outre, le second filtre à particules ayant un faible volume, son chargement est rapide lorsque le premier est défectueux. La contre-pression produite par le second filtre qui résulte de ce dysfonctionnement devient rapidement importante.

Le document de brevet FR 2 799 504, qui adopte une approche différente, propose un procédé de diagnostic d'un système d'échappement de moteur à combustion interne comportant un filtre à particules et des moyens pilotés pour régénérer le filtre. Différents capteurs, tels que des capteurs de pression et de température placés en amont et en aval du filtre sont disponibles. Des cartographies sont utilisées pour surveiller le filtre par prédiction de son chargement, cette surveillance reposant sur la comparaison de deux grandeurs, à savoir la mesure du chargement en particules piégées dans le filtre à partir par exemple de la pression différentielle mesurée aux bornes du filtre et du débit volumique de gaz dans le filtre (recalculé à partir des signaux débit d'air d'admission, débit de carburant injecté, régime moteur, température et pression en amont du filtre), et l'estimation du chargement en particules piégées dans le filtre à partir d'un modèle d'émission des particules par le moteur (permettant d'estimer pour une durée donnée et pour un point de fonctionnement donné du moteur la quantité de particules émises) et d'un modèle de fonctionnement du filtre (permettant d'estimer pour une durée donnée et pour des conditions de fonctionnement données du filtre la quantité de particules brûlées dans le filtre).

Pour une période donnée (de préférence à l'intérieur d'une phase de chargement ou d'une phase de régénération du filtre), les variations mesurées et estimées du chargement du filtre sont déterminées puis comparées. En cas d'écart significatif, le procédé permet de conclure que le filtre à particules ou les moyens de régénération sont défaillants. Suivant que la période de comparaison s'est effectuée en phase de stockage ou en phase de régénération et suivant le signe de l'écart entre la valeur mesurée et la valeur estimée, il est possible de caractériser plus précisément le dysfonctionnement. La principale différence avec les méthodes précédentes est que l'estimation du chargement du filtre est déduite d'un modèle de fonctionnement du moteur et d'un modèle de fonctionnement du système d'échappement, l'état de chargement du filtre étant toujours calculé à partir du débit volumique de gaz dans le filtre et de la différence de pression entre l'amont et l'aval du filtre. La surveillance repose ainsi sur la comparaison entre une valeur mesurée et une valeur estimée et non plus sur la comparaison entre une valeur mesurée et une valeur calibrée.

Le brevet FR 2 814 498 propose un procédé qui diagnostique une détérioration du filtre à particules lorsque la valeur de l'énergie dégagée lors de la phase de régénération est supérieure à une valeur d'énergie maximale prédéterminée, au delà de laquelle apparaissent les premières craquelures significatives. L'énergie dégagée lors de la phase de régénération est déterminée à partir de la différence entre l'estimation de la température en aval du filtre, abstraction faite de la combustion des suies, et la mesure de la température en aval du filtre.

La surveillance repose donc à nouveau sur la comparaison entre une valeur mesurée et une valeur estimée. Un décalage substantiel est en théorie synonyme de dégradation et de perte d'efficacité de filtration du filtre. Le diagnostic n'a pas recours à la pression différentielle entre l'amont et l'aval du filtre mais à la température en aval du filtre.

Les procédés connus de ces brevets utilisent soit une mesure de pression différentielle aux bornes du filtre, qui conduit à la nécessité de prévoir deux piquages dans la ligne d'échappement, soit des modèles, tels que le modèle de production de suie, dont le domaine de validité est difficile à contrôler.

Dans ce contexte, l'invention a pour but de proposer une alternative avantageuse aux procédés connus.

A cette fin, le procédé de l'invention, par ailleurs conforme à la définition générique qu'en donne le préambule ci-dessus, est essentiellement caractérisé en ce que l'étape itérative de traitement comprend : une opération itérative d'observation adaptative, exploitant le modèle physique et produisant, en tant que données de sortie, des estimations de la pression et de la température dans la cavité d'entrée, ainsi qu'une estimation d'un paramètre de perturbation de fonctionnement du filtre; une opération itérative de corrélation produisant une estimation de l'indicateur d'état à partir des données de sortie de l'opération d'observation adaptative; et une opération itérative de comparaison produisant un diagnostic de l'état du filtre par comparaison de l'estimation de l'indicateur d'état avec au moins une valeur de seuil calibrée, représentative d'un cas limite de l'état opérationnel du filtre.

Les grandeurs physiques connaissables comprennent avantageusement la température et la pression des gaz en amont et en aval du filtre, et le débit massique de gaz par unité de surface en amont du filtre.

De préférence, le modèle relie les grandeurs connaissables à la pression et la température des gaz dans la cavité d'entrée et au paramètre de perturbation de fonctionnement du filtre.

Le procédé de l'invention peut typiquement comprendre en outre une étape préalable de calibrage au cours de laquelle chaque valeur de seuil calibrée est obtenue par relevé de l'estimation de l'indicateur d'état dans différents cas limites de l'état opérationnel du filtre.

De préférence, les cas limites de l'état opérationnel du filtre incluent l'un au moins des cas suivants : le filtre est fissuré; le filtre est percé; le filtre est absent.

Le procédé de l'invention peut aussi comprendre une opération itérative de combinaison consistant à déduire le débit massique de gaz par unité de surface en amont du filtre à partir de données relatives au débit d'air admis dans le moteur, au débit de carburant admis dans le moteur, au régime du moteur, à la pression du gaz en amont du filtre, et à la température du gaz en amont du filtre.

Selon le procédé de l'invention, l'indicateur d'état est homogène à une épaisseur de suie dans la cavité d'entrée du filtre.

D'autres caractéristiques et avantages de l'invention ressortiront clairement de la description qui en est faite ci-après, à titre indicatif et nullement limitatif, en référence aux dessins annexés, dans lesquels :

- la figure 1 est une vue en coupe schématique partielle agrandie d'un filtre à particules, illustrant un canal d'entrée contribuant à la formation de la cavité d'entrée, et un canal de sortie adjacente, contribuant à la formation de la cavité de sortie ;
- la figure 2 est un diagramme illustrant les entrées et les sorties d'un module de simulation mis en oeuvre dans le procédé de l'invention ;
- la figure 3 est un diagramme illustrant les entrées et les sorties d'un module d'observation adaptative mis en oeuvre dans le procédé de l'invention ;
- la figure 4 est un schéma illustrant un moteur à allumage par compression équipé d'un filtre à particules ;
- la figure 5 est un diagramme illustrant les entrées et les sorties d'un module d'observation adaptative et d'un module de corrélation mis en oeuvre dans le procédé de l'invention ;
- la figure 6 est un diagramme illustrant un module de comparaison mis en oeuvre dans le procédé de l'invention;
- la figure 7 est un diagramme représentant, en fonction du temps mesuré en secondes et pris en abscisse, différentes pressions constatées avec un filtre troué rejetant 0.18 g de suie par kilomètre;
- la figure 8 est un diagramme représentant, en fonction du temps mesuré en secondes et pris en abscisse, différentes températures constatées avec un filtre troué rejetant 0.18 g de suie par kilomètre;
- la figure 9 est un diagramme représentant, en fonction du temps mesuré en secondes et pris en abscisse, différentes valeurs du coefficient k, constatées avec un filtre troué rejetant 0.18 g de suie par kilomètre; et

- la figure 10 est un diagramme représentant, en fonction du temps mesuré en secondes et pris en abscisse, différentes valeurs de l'épaisseur équivalente de $\hat{w}$, constatées avec un filtre troué suie rejetant 0.18 g de suie par kilomètre.

Comme annoncé précédemment, l'invention concerne un procédé de surveillance de l'état opérationnel d'un filtre à particules équipant un moteur thermique.

L'invention s'applique plus particulièrement aux moteurs diesel 1 (figure 4) dont les gaz d'échappement animent la turbine d'un turbocompresseur 2 puis traversent un filtre à particules 3.

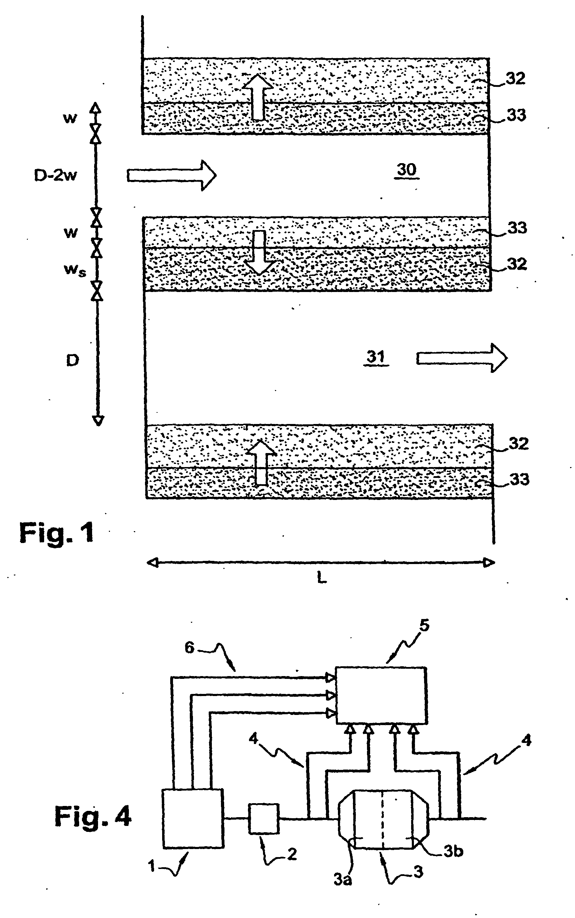

Ce filtre comprend, d'amont en aval dans le sens de circulation des gaz, une cavité 3a d'entrée de gaz d'échappement polluants, formée d'une multitude de canaux d'entrée tels que le canal 30 de la figure 1, et une cavité 3b de sortie de gaz d'échappement dépollués, formée d'une multitude de canaux de sortie tels que le canal 31 de la figure 1.

Comme le montre encore la figure 1, les cavités d'entrée et de sortie sont séparées l'une de l'autre par une pluralité de parois poreuses telles que 32 sur lesquelles se forment des dépôts de suie 33.

Des capteurs matériels ou logiciels de pression et de température, désignés de façon générique par la référence 4 sur la figure 4, sont prévus en amont et en aval du filtre 3.

Le procédé de l'invention comprend, de façon classique, une étape itérative de mesure au cours de laquelle sont évaluées des grandeurs physiques connaissables appartenant à un ensemble de grandeurs physiques dynamiques associées au fonctionnement du filtre à particules.

Les grandeurs physiques connaissables choisies dans l'invention comprennent la température $T_{amont}$ des gaz en amont du filtre, la température $T_{aval}$ des gaz en amont du filtre en aval du filtre, la pression $P_{amont}$ des gaz en amont du filtre, la pression $P_{aval}$ des gaz en aval du filtre, et le débit massique $q_{amont}$ de gaz par unité de surface en amont du filtre.

L'exploitation de ces grandeurs physiques connaissables est en réalité prédéfinie au cours d'une étape préalable de modélisation, mise en oeuvre avant toute application concrète du procédé de l'invention, et au cours de laquelle est construit un modèle physique impliquant l'ensemble des grandeurs physiques dynamiques associées de façon pertinente au fonctionnement du filtre à particules, et reliant les grandeurs connaissables $T_{amont}$, $T_{aval}$, $P_{amont}$, $P_{aval}$, et $q_{amont}$ à la pression P1 et la température T1 des gaz dans la cavité d'entrée et à un paramètre k de perturbation de fonctionnement du filtre.

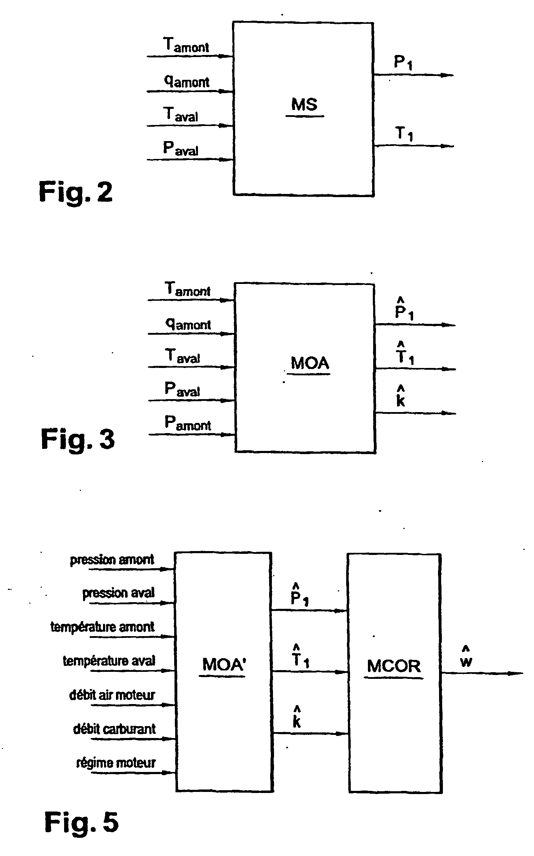

L'Annexe 1, qui se réfère à la figure 2, donne à l'homme de métier tous les détails nécessaires à la compréhension de cette étape préalable de modélisation, présentée comme la réalisation d'un module de simulation MS dans lequel la pression $P_{amont}$ en amont du filtre est assimilée à la pression P1 des gaz dans la cavité d'entrée du filtre.

Lors de sa mise en oeuvre concrète, et outre l'étape itérative de mesure, le procédé de l'invention comprend une étape itérative de traitement, au cours de laquelle sont effectués des calculs impliquant le modèle physique et les grandeurs physiques connaissables précédemment évaluées, cette étape de traitement ayant pour but de produire un indicateur d'état lié à l'état opérationnel du filtre.

Selon l'invention, l'étape itérative de traitement comprend tout d'abord une opération itérative d'observation adaptative, qui exploite le modèle physique développé en Annexe 1 et qui produit, en tant que données de sortie, une estimation $\hat{P}_1$ de la pression dans la cavité d'entrée 3a du filtre, une estimation $\hat{T}_1$ de la température dans cette cavité d'entrée 3a, et une estimation $\hat{k}$ du paramètre k de perturbation de fonctionnement du filtre.

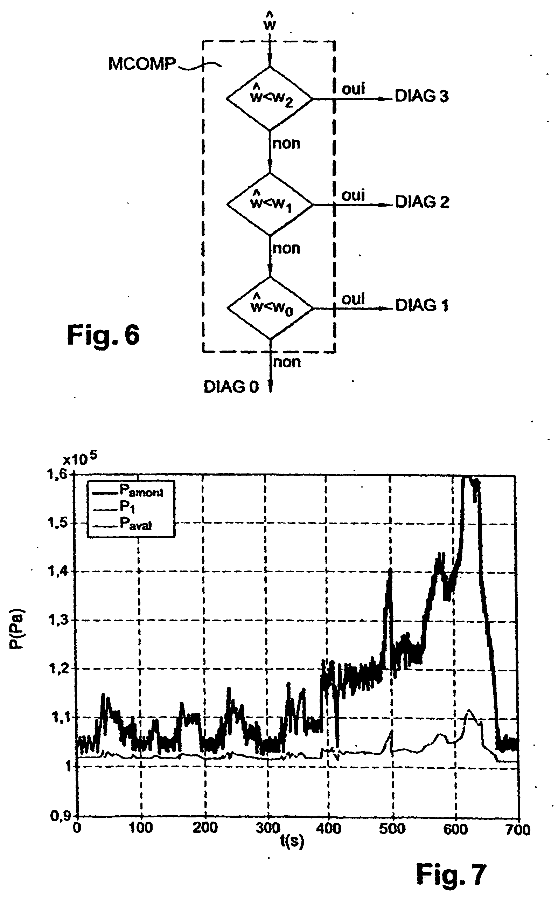

L'Annexe 2, qui se réfère à la figure 3 et renvoie aux figures 7 à 9, donne à l'homme de métier tous les détails nécessaires à la compréhension de cette opération itérative d'observation adaptative, présentée comme la réalisation d'un module d'observation adaptative MOA.

Au lieu d'être mesuré directement, le débit massique $q_{amont}$ de gaz par unité de surface à l'entrée du filtre 3 peut être recalculé à partir de données relatives au débit d'air Da admis dans le moteur, au débit de carburant Dc admis dans le moteur, et au régime du moteur Rm, (signaux fournis au calculateur de contrôle moteur 5 par des capteurs 6), et à partir des données relatives à la pression du gaz en amont du filtre, à la température du gaz en amont du filtre, et à la géométrie du filtre (largeur de chaque canal et nombre de canaux).

Cette possibilité est illustrée sur la figure 5, sur laquelle le module d'observation adaptative MOA' a été adapté pour inclure une opération itérative de combinaison lui permettant de fournir les estimations $\hat{P}_1$, $\hat{T}_1$, et $\hat{k}$ à partir des grandeurs physiques $P_{amont}$, $P_{aval}$, $T_{amont}$, $T_{aval}$, Da, Dc, et Rm.

Selon l'invention, l'étape itérative de traitement comprend également une opération itérative de corrélation, matérialisée sur la figure 5 sous la forme d'un module MCOR, et produisant une estimation $\hat{w}$ de l'indicateur d'état à partir des données de sortie $\hat{P}_1$, $\hat{T}_1$, et $\hat{k}$ de l'opération d'observation adaptative MOA ou MOA'.

L'Annexe 3 donne à l'homme de métier tous les détails nécessaires à la compréhension de cette opération itérative de corrélation, constituée par l'application d'une loi physique connue sous le nom de "loi de Darcy", et produisant, en tant qu'estimation de l'indicateur d'état, la grandeur $\hat{w}$ homogène à une épaisseur de suie dans le filtre à particules 3.

Enfin, l'étape itérative de traitement comprend une opération itérative de comparaison, illustrée sur la figure 6 sous la forme d'un module de comparaison MCOMP, et produisant un diagnostic de l'état du filtre, tel que DIAG0 à DIAG3, par comparaison de l'estimation w de l'indicateur d'état avec une ou plusieurs valeurs de seuil calibrées, telles que w0 à w2, dont chacune est représentative d'un cas limite de l'état opérationnel du filtre 3.

Les différentes valeurs de seuil calibrées sont par exemple obtenues, au cours d'une étape préalable de calibrage, par relevé de l'estimation $\hat{w}$ de l'indicateur d'état dans différents cas limites de l'état opérationnel du filtre, et notamment dans le cas où le filtre 3 est fissuré, où le filtre 3 est percé, et où le filtre 3 est absent, les seuils correspondant à ces différents cas étant plus précisément évoqués dans l'Annexe 3.

NOMENCLATURE

**Lettres latines :**

| | | |
|---|---|---|
| $a$ | Coefficient (observateur adaptatif) | - |
| $D$ | Largeur d'un canal. | m |
| $h_1$ | Coefficient d'échange convectif. | $W.m^{-2}.K^{-1}$ |
| $k$ | Paramètre de perturbation à surveiller. | $m.s^3.kg^{-1}$ |
| $k_p$ | Perméabilité du dépôt de particules. | $m^2$ |
| $k_s$ | Perméabilité de la paroi en carbure de silicium. | $m^2$ |
| $K_1$ | Conductivité | $W.m^{-1}.K^{-1}$ |
| $L$ | Longueur du filtre. | m |
| $P_1$ | Pression du gaz dans le canal d'entrée. | Pa |
| $P_{amont}$ | Pression du gaz à l'entrée du filtre. | Pa |
| $P_{aval}$ | Pression du gaz à la sortie du filtre. | Pa |
| $r$ | Constante de l'air. | $J.kg^{-1}.K^{-1}$ |
| $T_1$ | Température du gaz dans le canal d'entrée. | K |
| $T_{amont}$ | Température du gaz à l'entrée du filtre. | K |
| $T_{aval}$ | Température du gaz à la sortie du filtre. | K |
| $t$ | Temps | s |
| $\hat{w}$ | Epaisseur équivalente du lit de suie. | m |
| $w_s$ | Epaisseur de la paroi en carbure de silicium. | m |
| $z_1$ | Variable auxiliaire (observateur adaptatif). | - |
| $z_2$ | Variable auxiliaire (observateur adaptatif). | - |

**Lettres grecques :**

| | | |
|---|---|---|
| $\alpha$ | Coefficient (observateur adaptatif) | - |
| $\gamma$ | Rapport $\dfrac{C_p}{C_v}$ | - |
| $\zeta$ | Coefficient (flux de température). | $m^{-1}$ |
| $\kappa$ | Coefficient (observateur adaptatif). | - |
| $\phi$ | Fonction $x \to \dfrac{x}{\sqrt{|x|}}$. | - |

Suite de tableau

| μ | Viscosité | kg.m⁻¹.s⁻¹ |
|---|---|---|
| ρ | Coefficient (observateur adaptatif). - | - |

**Notations :**

| | Dérivée temporelle. | - |
|---|---|---|
| ^ | Estimée (observateur). | - |
| $T$ | Transposée | - |

ANNEXE 1.

**Module de simulation**

Le module de simulation MS est constitué par un modèle dynamique non linéaire d'un filtre à particules Diesel, paramétré par un coefficient k reflétant les anomalies susceptibles de l'affecter.

Plus précisément, ce module simule la pression et la température dans le canal d'entrée 30 du filtre 3 à partir des données de température en amont et en aval du filtre, de débit massique par unité de surface en amont du filtre, et de pression en aval du filtre.

Ce modèle s'écrit :

$$\dot{P}_1 = \frac{\gamma r}{L} q_{amont} T_1 + \frac{K_1(\gamma - 1)}{L} \varsigma (T_{amont} - T_1) + 4(\gamma - 1)\frac{h_1}{D}(T_{aval} - T_1) - \frac{4rkT_1}{D^2}\left(\phi^{-1}(P_1) - \phi^{-1}(P_{aval})\right)$$

$$\dot{T}_1 = \frac{T_1}{P_1}\left[\frac{(\gamma - 1)r}{L} q_{amont} T_1 + 4(\gamma - 1)\frac{h_1}{D}(T_{aval} - T_1) + \left(\frac{K_1(\gamma - 1)}{L} + \frac{r}{2}q_{amont}\right)\varsigma(T_{amont} - T_1)\right]$$

Les états du modèle sont :

- pression $P_1$ du gaz dans le canal d'entrée,
- température $T_1$ du gaz dans le canal d'entrée.

Les entrées (mesurées) du modèle sont :

- température $T_{amont}$ du gaz à l'entrée du filtre,
- débit massique (par unité de surface) $q_{amont}$ du gaz à l'entrée du filtre,
- température $T_{aval}$ du gaz à la sortie du filtre,
- pression $P_{aval}$ du gaz à la sortie du filtre.

La sortie (mesurée) est :

- pression $P_{amont}$ du gaz l'entrée du filtre.

Le paramètre (intermédiaire) de perturbation à surveiller est noté $k$.
On note par ailleurs :

$$\begin{cases} x_1 = P_1 \\ x_2 = T_1 \\ u_1 = T_{amont} \\ u_2 = q_{amont} \\ u_3 = T_{aval} \\ u_4 = P_{aval} \\ y = P_{amont} \end{cases}$$

Avec ces notations, le simulateur pression/température s'écrit :

$$\begin{cases} \dot{x}_1 = f_1(u_1, u_2, u_3, u_4, x_1, x_2, k) \\ \dot{x}_2 = f_2(u_1, u_2, u_3, u_4, x_1, x_2, k) \\ y = x_1 \end{cases}$$

avec :

$$f_1(u_1, u_2, u_3, u_4, x_1, x_2, k) = \frac{\gamma r}{L} u_2 x_2 + \frac{K_1(\gamma - 1)}{L} \zeta(u_1 - x_2) + 4(\gamma - 1)\frac{h_1}{D}(u_3 - x_2) - \frac{4rkx_1}{D^2}\left(\phi^{-1}(x_1) - \phi^{-1}(u_4)\right)$$

$$f_2(u_1, u_2, u_3, u_4, x_1, x_2, k) = \frac{x_2}{x_1}\left[\frac{(\gamma - 1)r}{L} u_2 x_2 + 4(\gamma - 1)\frac{h_1}{D}(u_3 - x_2) + \left(\frac{K_1(\gamma - 1)}{L} + \frac{r}{2} u_2\right)\zeta(u_1 - x_2)\right]$$

ANNEXE 2.

**Module d'observation adaptative**

De façon générale, un observateur adaptatif estime conjointement les états et les paramètres de systèmes dynamiques.

En l'occurrence, l'observateur adaptatif MOA ou MOA' est conçu pour opérer une surveillance de l'état opérationnel du filtre, par l'intermédiaire du paramètre de perturbation k, et pour le modèle décrit en Annexe 1.

Le module MOA ou MOA' permet d'estimer la pression et la température dans chaque canal d'entrée 30 du filtre 3 et le coefficient k à partir des données de pression et de température en amont et en aval du filtre 3 et du débit massique par unité de surface en amont de ce filtre.

L'observateur adaptatif proposé s'écrit :

$$\dot{z}_1 = \left(\frac{\gamma r}{L} q_{amont} - \frac{K_1(\gamma - 1)}{L}\zeta - 4(\gamma - 1)\frac{h_1}{D} - \frac{4r\hat{k}}{D^2}\left(\phi^{-1}(\hat{P}_1) - \phi^{-1}(P_{aval})\right)\right)z_1$$

$$- \left(\rho \kappa + \frac{8r}{D^2}\hat{T}_1\left|\hat{P}_1\right|\hat{k}\right)z_1 - \frac{4r\hat{T}_1}{D^2}\left(\phi^{-1}(\hat{P}_1) - \phi^{-1}(P_{aval})\right)$$

$$\dot{z}_2 = \left[ -\frac{\hat{T}_1}{\hat{P}_1^2} \left[ \frac{(\gamma-1)r}{L} q_{amont}\hat{T}_1 + 4(\gamma-1)\frac{h_1}{D}(T_{aval}-\hat{T}_1) + \left( \frac{K_1(\gamma-1)}{L} + \frac{r}{2}q_{amont} \right)\zeta(T_{amont}-\hat{T}_1) \right] + \rho^2\frac{\kappa}{\alpha} \right] z_1$$

$$+ \frac{1}{\hat{P}_1}\left[ \frac{2(\gamma-1)r}{L} q_{amont}\hat{T}_1 + 4(\gamma-1)\frac{h_1}{D}(T_{aval}-2\hat{T}_1) + \left( \frac{K_1(\gamma-1)}{L} + \frac{r}{2}q_{amont} \right)\zeta(T_{amont}-2\hat{T}_1) \right] z_2$$

$$\dot{\hat{P}}_1 = \frac{\gamma r}{L} q_{amont}\hat{T}_1 + \frac{K_1(\gamma-1)}{L}\zeta(T_{amont}-\hat{T}_1) + 4(\gamma-1)\frac{h_1}{D}(T_{aval}-\hat{T}_1)$$

$$- \frac{4r\hat{k}\hat{T}_1}{D^2}\left( \phi^{-1}(\hat{P}_1) - \phi^{-1}(P_{aval}) \right) - \rho\kappa\left(\hat{P}_1 - P_1\right) + az_1^2\left(P_1 - \hat{P}_1\right)$$

$$\dot{\hat{T}}_1 = \frac{\hat{T}_1}{\hat{P}_1}\left[ \frac{(\gamma-1)r}{L} q_{amont}\hat{T}_1 + 4(\gamma-1)\frac{h_1}{D}(T_{aval}-\hat{T}_1) + \left( \frac{K_1(\gamma-1)}{L} + \frac{r}{2}q_{amont} \right)\zeta(T_{amont}-\hat{T}_1) \right]$$

$$+ \rho^2\frac{\kappa}{\alpha}\left(\hat{P}_1 - P_1\right) + az_1z_2\left(P_1 - \hat{P}_1\right)$$

$$\dot{\hat{k}} = az_1\left(P_1 - \hat{P}_1\right)$$

On note :

$$\begin{cases} \hat{x}_1 = \hat{P}_1 \\ \hat{x}_2 = \hat{T}_1 \\ u_1 = T_{amont} \\ u_2 = q_{amont} \\ u_3 = T_{aval} \\ u_4 = P_{aval} \\ y = P_{amont} \end{cases}$$

Avec ces notations, l'observateur adaptatif pression/température/coefficient k proposé s'écrit :

$$\begin{cases} \dot{z}_1 = g_1(u_1,u_2,u_3,u_4,z_1,z_2,\hat{x}_1,\hat{x}_2,\hat{k}) \\ \dot{z}_2 = g_2(u_1,u_2,u_3,u_4,z_1,z_2,\hat{x}_1,\hat{x}_2,\hat{k}) \\ \dot{\hat{x}}_1 = f_1(u_1,u_2,u_3,u_4,\hat{x}_1,\hat{x}_2,\hat{k}) - \rho\kappa(\hat{x}_1 - y) + az_1^2(y-\hat{x}_1) \\ \dot{\hat{x}}_2 = f_2(u_1,u_2,u_3,u_4,\hat{x}_1,\hat{x}_2,\hat{k}) + \rho^2\dfrac{\kappa}{\alpha}(\hat{x}_1 - y) + az_1z_2(y-\hat{x}_1) \\ \dot{\hat{k}} = az_1(y-\hat{x}_1) \end{cases}$$

avec :

$$g_1(u_1,u_2,u_3,u_4,z_1,z_2,\hat{x}_1,\hat{x}_2,\hat{k}) = \left(\frac{\gamma r}{L}u_2 - \frac{K_1(\gamma-1)}{L}\zeta - 4(\gamma-1)\frac{h_1}{D} - \frac{4r\hat{k}}{D^2}\left(\phi^{-1}(\hat{x}_1) - \phi^{-1}(u_4)\right)\right)z_1$$

$$-\left(\rho\kappa + \frac{8r}{D^2}\hat{x}_2|\hat{x}_1|\hat{k}\right)z_1 - \frac{4r\hat{x}_2}{D^2}\left(\phi^{-1}(\hat{x}_1) - \phi^{-1}(u_4)\right)$$

et :

$$g_2(u_1,u_2,u_3,u_4,z_1,z_2,\hat{x}_1,\hat{x}_2,\hat{k}) =$$
$$\left[-\frac{\hat{x}_2}{\hat{x}_1^2}\left[\frac{(\gamma-1)r}{L}u_2\hat{x}_2 + 4(\gamma-1)\frac{h_1}{D}(u_3-\hat{x}_2) + \left(\frac{K_1(\gamma-1)}{L} + \frac{r}{2}u_2\right)\zeta(u_1-\hat{x}_2)\right] + \rho^2\frac{\kappa}{\alpha}\right]z_1$$
$$+\frac{1}{\hat{x}_1}\left[\frac{2(\gamma-1)r}{L}u_2\hat{x}_2 + 4(\gamma-1)\frac{h_1}{D}(u_3-2\hat{x}_2) + \left(\frac{K_1(\gamma-1)}{L} + \frac{r}{2}u_2\right)\zeta(u_1-2\hat{x}_2)\right]z_2$$

Les figures 7 à 9 illustrent les variations de la pression et de la température dans chaque canal d'entrée d'un filtre catalytique troué, et du coefficient k, estimés par l'intermédiaire de l'observateur adaptatif proposé.

ANNEXE 3.

**Module de corrélation - Loi de Darcy - Diagnostic**

La surveillance de l'état opérationnel du filtre à particules 3 passe par la surveillance du paramètre de perturbation k estimé par l'observateur adaptatif en même temps que la pression et la température dans chaque canal d'entrée du filtre.

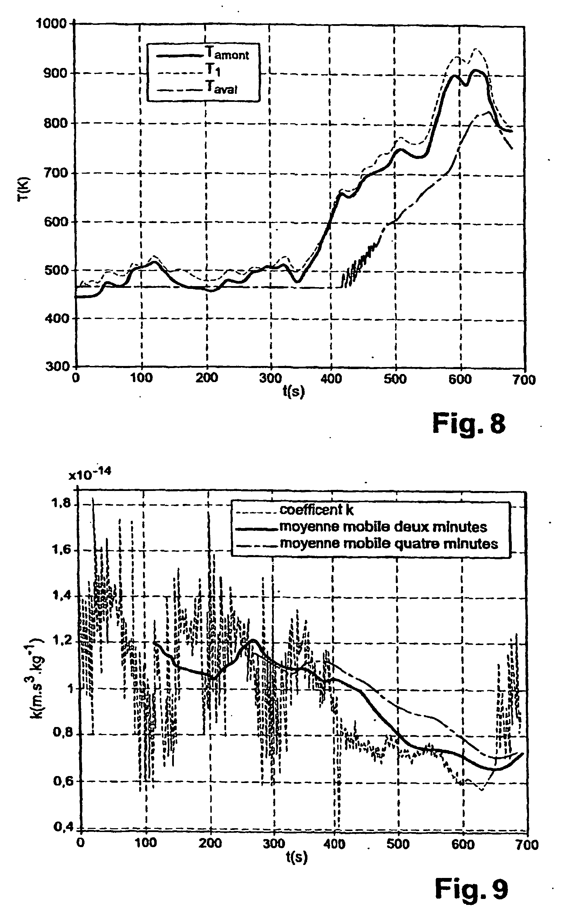

Il apparaît, en théorie comme en pratique, que le paramètre $k$ n'offre qu'une vision approximative de l'état de dégradation mécanique du filtre à particules. En effet, ce paramètre rend aussi bien compte des effets thermiques qu'on veut ignorer que des effets mécaniques qu'on veut surveiller. Ce phénomène est d'ailleurs bien illustré par les figures 8 et 9, où, pour un état de dégradation constant du filtre, $\hat{k}$ diminue alors que $T_{aval}$ augmente. C'est pour surmonter cette difficulté que le procédé de l'invention fait intervenir le nouveau paramètre que constitue l'estimation w de l'indicateur d'état, qui est homogène à une épaisseur de suie, et qui est directement corrélé à un état de dégradation de la fonction filtration du filtre 3 par la relation :

$$\hat{w} = h(\hat{P}_1,\hat{T}_1,\hat{k})$$

où h est une fonction connue, obtenue par la loi de Darcy. Plus précisément, on a :

$$h(\hat{P}_1, \hat{T}_1, \hat{k}) = k_\rho(\hat{P}_1, \hat{T}_1) \left( \frac{D}{2\hat{k}\mu(\hat{T}_1)r\hat{T}_1} - \frac{w_s}{k_s} \right)$$

avec :

$$k_\rho(\hat{P}_1, \hat{T}_1) = 8,888.10^{-13} \frac{\hat{T}_1^{1,125}}{\hat{P}_1}$$

et :

$$\mu(\hat{T}_1) = 5,565.10^{-7} \hat{T}_1^{0,625}$$

Le paramètre $\hat{w}$ ainsi défini joue le rôle d'indicateur de défaut en ce sens que sa diminution en deçà d'un seuil calibré sur des données réelles sera symptomatique d'un comportement anormal du filtre et pourra révéler une situation de filtre fissuré, troué ou absent.

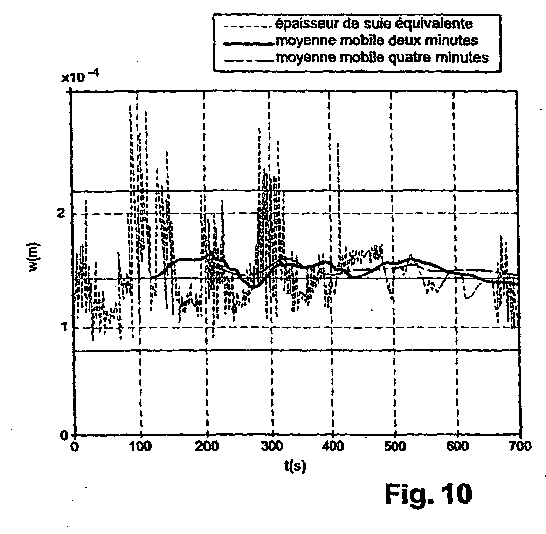

La figure 10 illustre les variations de l'épaisseur de suie équivalente d'un filtre catalytique troué. Les traits horizontaux représentent les trois seuils calibrés successifs w0 > w1 > w2. En pratique, afin de s'affranchir du bruit, la comparaison entre le paramètre $\hat{w}$ et les différents seuils s'effectue sur une version filtrée de $\hat{w}$, telle qu'une moyenne mobile sur quatre minutes.

Sur cet exemple, le seuil de diagnostic de filtre troué est pris à w1, le filtre rejetant alors 0.18g de suie par kilomètre. Lorsque c'est le cas, l'épaisseur équivalente de suie, dont la valeur est par exemple filtrée sur 4 minutes, diminue en deçà du seuil w1, et un voyant d'alerte correspondant est allumé, diagnostiquant un filtre troué (DIAG2).

Si le défaut est plus grave encore, l'épaisseur équivalente de suie diminue en deçà du seuil w2, indiquant une absence de filtre (DIAG3).

Si, tout en étant au moins égale à w1, l'épaisseur équivalente de suie diminue en deçà du seuil w0, le procédé diagnostique une fissuration du filtre (DIAG1).

Enfin, si aucune de ces conditions n'est remplie, le filtre est considéré comme intact (DIAG0).

**Revendications**

1.  Procédé de surveillance de l'état opérationnel d'un filtre à particules (3) équipant un moteur thermique (1) et comprenant, d'amont en aval, une cavité d'entrée (3a) de gaz d'échappement polluants et une cavité de sortie (3b) de gaz d'échappement dépollués, ces cavités étant séparées l'une de l'autre par une pluralité de parois poreuses (32), et ce procédé comprenant :

    - une étape préalable de modélisation au cours de laquelle est construit un modèle physique impliquant une pluralité de grandeurs physiques dynamiques ($T_{amont}$, $P_{amont}$, $T_{aval}$, $P_{aval}$, $q_{amont}$) associées au fonctionnement du filtre à particules (3),
    - une étape itérative de mesure au cours de laquelle sont évaluées des grandeurs physiques connaissables ($T_{amont}$, $P_{amont}$, $T_{aval}$, $P_{aval}$, $q_{amont}$) appartenant à la pluralité de grandeurs physiques dynamiques, et
    - une étape itérative de traitement au cours de laquelle sont effectués des calculs impliquant le modèle physique et les grandeurs physiques connaissables évaluées, cette étape de traitement produisant au moins un indicateur d'état lié à l'état opérationnel du filtre, **caractérisé en ce que** l'étape itérative de traitement comprend :

        - une opération itérative d'observation adaptative (MOA, MOA'), exploitant le modèle physique et produisant, en tant que données de sortie, des estimations ($\hat{P}_1$, $\hat{T}_1$) de la pression et de la température dans la cavité d'entrée, ainsi qu'une estimation $(\hat{k})$ d'un paramètre de perturbation (k) de fonctionnement du filtre,

- une opération itérative de corrélation (MCOR) produisant une estimation $(\hat{w})$ de l'indicateur d'état à partir des données de sortie $(\hat{P}_1, \hat{T}_1, \hat{k})$ de l'opération d'observation adaptative (MOA, MOA'), et

- une opération itérative de comparaison (MCOMP) produisant un diagnostic (DIAG0 à DIAG3) de l'état du filtre (3) par comparaison de l'estimation $(\hat{w})$ de l'indicateur d'état avec au moins une valeur de seuil calibrée (w0 à w2), représentative d'un cas limite de l'état opérationnel du filtre.

**2.** Procédé suivant la revendication 1, **caractérisé en ce que** les grandeurs physiques connaissables ($T_{amont}$, $P_{amont}$, $T_{aval}$, $P_{aval}$, $q_{amont}$) comprennent la température et la pression des gaz en amont et en aval du filtre, et le débit massique de gaz par unité de surface en amont du filtre.

**3.** Procédé suivant la revendication 1 ou 2, **caractérisé en ce que** le modèle relie les grandeurs connaissables ($T_{amont}$, $P_{amont}$, $T_{aval}$, $P_{aval}$, $q_{amont}$) à la pression et la température ($P_1$, $T_1$) des gaz dans la cavité d'entrée et au paramètre de perturbation (k) de fonctionnement du filtre.

**4.** Procédé suivant l'une quelconque des revendications précédentes, **caractérisé en ce qu'**il comprend en outre une étape préalable de calibrage au cours de laquelle chaque valeur de seuil calibrée (w0 à w2) est obtenue par relevé de l'estimation (w) de l'indicateur d'état dans différents cas limites de l'état opérationnel du filtre (3).

**5.** Procédé suivant la revendication 4, **caractérisé en ce que** les cas limites de l'état opérationnel du filtre incluent l'un au moins des cas suivants : le filtre est fissuré; le filtre est percé; le filtre est absent.

**6.** Procédé suivant l'une quelconque des revendications précédentes combinée à la revendication 2, **caractérisé en ce qu'**il comprend une opération itérative de combinaison consistant à déduire le débit massique ($q_{amont}$) de gaz par unité de surface en amont du filtre à partir de données (Da, Dc, et Rm, $P_{amont}$, $T_{amont}$) relatives au débit d'air admis dans le moteur, au débit de carburant admis dans le moteur, au régime du moteur, à la pression du gaz en amont du filtre, et à la température du gaz en amont du filtre.

**7.** Procédé suivant l'une quelconque des revendications précédentes, **caractérisé en ce que** l'indicateur d'état $(\hat{w})$ est homogène à une épaisseur de suie dans la cavité d'entrée (3a) du filtre.

**Claims**

**1.** A process for monitoring the operational state of a particulates filter (3) equipping a heat engine (1) and comprising in a downstream direction an intake cavity (3a) for polluting exhaust gases and an outlet cavity (3b) for cleaned exhaust gases, said cavities being separated from each other by a plurality of porous walls (32), and said process comprising:

- a preliminary modelling step, in the course of which a physical model is constructed involving a plurality of dynamic physical parameters ($T_{upstream}$, $P_{upstream}$, $T_{downstream}$, $P_{downstream}$, $q_{upstream}$) associated with the functioning of the particulates filter (3),

- an iterative measuring step, in the course of which knowable physical parameters ($T_{upstream}$, $P_{upstream}$, $T_{downstream}$, $P_{downstream}$, $q_{upstream}$) belonging to the plurality of dynamic physical parameters are evaluated, and

- an iterative processing step, in the course of which calculations are effected involving the physical model and the evaluated knowable physical parameters, said processing step producing at least one state indicator linked to the operational state of the filter, **characterised in that** the iterative processing step comprises:

- an iterative adaptive observation operation (MOA, MOA') exploiting the physical model and producing as output data estimates $(\hat{P}_1, \hat{T}_1)$ in respect of the pressure and temperature in the intake cavity and an estimate $(\hat{k})$ of a filter functioning disturbance parameter (k),

- an iterative correlation operation (MCOR) producing an estimate $(\hat{w})$ of the indicator state from the output data $(\hat{P}_1, \hat{T}_1, \hat{k})$ of the adaptive observation operation (MOA, MOA'), and

- an iterative comparison operation (MCOMP) producing a diagnosis (DIAG0 to DIAG3) of the state of the filter (3) by comparison of the estimate $(\hat{w})$ of the state indicator with at least one calibrated threshold value (w0 to w2) representative of a limit case of the operational state of the filter.

**2.** A process according to claim 1 **characterised in that** the knowable physical parameters ($T_{upstream}$, $P_{upstream}$,

$T_{downstream}$, $P_{downstream}$, $q_{upstream}$) comprise the temperature and the pressure of the gases upstream and downstream of the filter and the mass flow rate of gas per unit of surface area upstream of the filter.

3. A process according to claim 1 or claim 2 **characterised in that** the model links the knowable parameters ($T_{upstream}$, $P_{upstream}$, $T_{downstream}$, $P_{downstream}$, $q_{upstream}$) to the pressure and the temperature ($P_1$, $T_1$) of the gases in the intake cavity and to the filter functioning disturbance parameter (k).

4. A process according to any one of the preceding claims **characterised in that** it further comprises a preliminary calibration step, in the course of which each calibrated threshold value (w0 to w2) is obtained by recording the estimate (w) of the state indicator in different limit cases of the operational state of the filter (3).

5. A process according to claim 4 **characterised in that** the limit cases of the operational state of the filter include one at least of the following cases: the filter is split; the filter is pierced; the filter is absent.

6. A process according to any one of the preceding claims combined with claim 2 **characterised in that** it comprises an iterative combination operation comprising deducing the mass flow rate ($q_{upstream}$) of gas per unit of surface area upstream of the filter from data (Da, Dc and Rm, $P_{upstream}$, $T_{upstream}$) relating to the flow of air admitted into the engine, the operating state of the engine, the pressure of the gas upstream of the filter, and the temperature of the gas upstream of the filter.

7. A process according to any one of the preceding claims **characterised in that** the state indicator ($\hat{w}$) is homogeneous with respect to a thickness of soot in the intake cavity (3a) of the filter.

**Patentansprüche**

1. Verfahren zur Überwachung des Betriebszustandes eines Partikelfilters (3) als Ausrüstung einer Wärmekraftmaschine (1), der von stromaufwärts nach stromabwärts eine Kammer (3a) für den Eingang von verschmutzendem Auspuffgas und eine Kammer (3b) für den Ausgang von gereinigtem Auspuffgas umfasst, wobei diese Kammern durch eine Mehrzahl von porösen Wandungen (32) voneinander getrennt sind, wobei dieses Verfahren folgendes umfasst:

    - einen Vorabmodellierungsschritt, während welchem ein physikalisches Modell erstellt wird, welches eine Mehrzahl von dynamischen physikalischen Größen ($T_{stromaufwärts}$, $P_{stromaufwärts}$, $T_{stromabwärts}$, $P_{stromabwärts}$, $q_{stromaufwärts}$) mit einschließt, die dem Betrieb des Partikelfilters (3) zugeordnet sind,
    - einen iterativen Messschritt, während welchem beobachtbare physikalische Größen ($T_{stromaufwärts}$, $P_{stromaufwärts}$, $T_{stromabwärts}$, $P_{stromabwärts}$, $q_{stromaufwärts}$) ermittelt werden, die zu der Mehrzahl dynamischer physikalischer Größen gehören, und
    - einen iterativen Verarbeitungsschritt, während welchem Berechnungen durchgeführt werden, die das physikalische Modell und die beobachtbaren, ermittelten physikalischen Größen involvieren, wobei dieser Verarbeitungsschritt wenigstens einen Zustandsindikator erzeugt, der mit dem Betriebszustand des Filters verbunden ist, **dadurch gekennzeichnet, dass** der iterative Verarbeitungsschritt folgendes umfasst:

        - einen iterativen Vorgang der adaptiven Beobachtung (MOA, MOA'), der das physikalische Modell ausnutzt und als Ausgangsdaten Schätzungen ($\hat{P}_1$, $\hat{T}_1$) des Druckes und der Temperatur in der Eingangskammer erzeugt, sowie eine Schätzung ($\hat{k}$) eines Parameters einer Störung (k) des Filterbetriebs,
        - einen iterativen Korrelationsvorgang (MCOR), der anhand der Ausgangsdaten ($\hat{P}_1$, $\hat{T}_1$, $\hat{k}$) des adaptiven Beobachtungsvorgangs (MOA, MOA') eine Abschätzung ($\hat{w}$) des Zustandsindikators erzeugt, und
        - einen iterativen Vergleichsvorgang (MCOMP), der durch Vergleich der Abschätzung ($\hat{w}$) des Zustandsindikators mit wenigstens einem kalibrierten Schwellenwert (w0 bis w2), der für einen Grenzfall das Betriebszustands des Filters repräsentativ ist, eine Diagnose (DIAG0 bis DIAG3) des Zustands des Filters (3) erzeugt.

2. Verfahren gemäß Anspruch 1, **dadurch gekennzeichnet, dass** die beobachtbaren physikalischen Größen ($T_{stromaufwärts}$, $P_{stromaufwärts}$, $T_{stromabwärts}$, $P_{stromabwärts}$, $q_{stromaufwärts}$) die Temperatur und den Druck der Gase stromaufwärts und stromabwärts des Filters umfassen, sowie den Massedurchsatz an Gas pro Flächeneinheit stromaufwärts des Filters.

3. Verfahren gemäß Anspruch 1 oder 2, **dadurch gekennzeichnet, dass** das Modell die beobachtbaren Größen ($T_{stromaufwärts}$, $P_{stromaufwärts}$, $T_{stromabwärts}$, $P_{stromabwärts}$, $q_{stromaufwärts}$) mit dem Druck und der Temperatur ($P_1$, $T_1$) der Gase in der Eingangskammer und mit dem Parameter einer Störung (k) des Filterbetriebs in Verbindung bringt.

4. Verfahren gemäß einem der vorhergehenden Ansprüche, **dadurch gekennzeichnet, dass** es außerdem einen Vorabkalibrierungsschritt umfasst, während welchem jeder kalibrierte Schwellenwert (w0 bis w2) durch Erfassung der Abschätzung ($\hat{w}$) des Zustandsindikators bei verschiedenen Grenzfällen des Betriebszustands des Filters (3) erhalten wird.

5. Verfahren gemäß Anspruch 4, **dadurch gekennzeichnet, dass** die Grenzfälle des Betriebszustands des Filters wenigstens einen der folgenden Fälle umfassen: der Filter hat Risse; der Filter ist löchrig; der Filter ist abwesend.

6. Verfahren gemäß einem der mit dem Anspruch 2 kombinierten vorhergehenden Ansprüche, **dadurch gekennzeichnet, dass** es einen iterativen Verbindungsvorgang umfasst, der darin besteht, den Massedurchsatz ($q_{stromaufwärts}$) an Gas pro Flächeneinheit stromaufwärts des Filters aus den Daten (Da, Dc und Rm, $P_{stromaufwärts}$, $T_{stromaufwärts}$) bezüglich des vom Motor empfangenen Luftdurchsatzes, des vom Motor empfangenen Kraftstoffdurchsatzes, der Motordrehzahl, des Gasdruckes stromaufwärts des Filters und der Gastemperatur stromaufwärts des Filters zu folgern.

7. Verfahren gemäß einem der vorhergehenden Ansprüche, **dadurch gekennzeichnet, dass** der Zustandsindikator ($\hat{w}$) homogen zu einer Rußdicke in der Eingangskammer (3a) des Filters ist.

**Fig. 1**

**Fig. 4**

Fig. 2

$T_{amont}$

$q_{amont}$

$T_{aval}$

$P_{aval}$

MS

$P_1$

$T_1$

Fig. 3

$T_{amont}$

$q_{amont}$

$T_{aval}$

$P_{aval}$

$P_{amont}$

MOA

$\hat{P}_1$

$\hat{T}_1$

$\hat{k}$

Fig. 5

pression amont

pression aval

température amont

température aval

débit air moteur

débit carburant

régime moteur

MOA'

$\hat{P}_1$

$\hat{T}_1$

$\hat{k}$

MCOR

$\hat{W}$

MCOMP

$\hat{w}$

$\hat{w} < w_2$ → oui → DIAG 3

non

$\hat{w} < w_1$ → oui → DIAG 2

non

$\hat{w} < w_0$ → oui → DIAG 1

non

DIAG 0

**Fig. 6**

**Fig. 7**

**Fig. 8**

**Fig. 9**

**Fig. 10**